# EUROPEAN PATENT APPLICATION

(11) **EP 4 656 352 A1**
(43) Date of publication of application: **03.12.2025**
(21) Application number: 23925358.6
(22) Date of filing: 05.10.2023
(51) Int. Cl.: B29C 48/305

(54) **DIE FOR EXTRUSION MOLDING, FILM MANUFACTURING APPARATUS, AND FILM MANUFACTURING METHOD**

(30) Priority: 01.03.2023 JP 2023030841
(71) Applicant: The Japan Steel Works, Ltd., Tokyo 141-0032 (JP)
(72) Inventor: YAMASHITA, Shohei, Tokyo 141-0032 (JP); KUSHIZAKI, Yoshiyuki, Tokyo 141-0032 (JP); CHIKARAISHI, Atsushi, Tokyo 141-0032 (JP); SHIOTANI, Tomoaki, Tokyo 141-0032 (JP)
(74) Representative: Simmons & Simmons LLP (Munich)
(86) International application number: PCT/JP2023/036424
(87) International publication number: WO 2024/180804

(57) **Abstract**

In an assumption that a virtual line passing through a center of a resin introduction part 31 and extending to an opening 25 in a Y-direction is a central axis 32c, a boundary BL34 between a land part 33 and a land part 34 includes: a region R1 including a portion intersecting the central axis 32c; a region R2 arranged between the region R1 and one end of the boundary between the land part 33 and the land part 34 in an X-direction; and a region R3 arranged between the region R1 and the other end of the boundary between the land part 33 and the land part 34 in the X-direction. A flow path length FPL1 extending from the boundary between the land part 33 and the land part 34 to the opening 25 is configured: in the region R2, to gradually change at a first change rate as it gets closer from the region R1 side to the one end; in the region R3, to gradually change at the first change rate as it gets closer from the first region side to the other end; and in the region R1, to be constant or change at a smaller change rate than the first change rate.

## Description

### TECHNICAL FIELD

The present invention relates to an extrusion molding die, a film manufacturing apparatus, and a film manufacturing method.

### BACKGROUND ART

Japanese Patent Application Laid-Open Publication No. 2011-173263 (Patent Document 1) describes a technique relating to an extrusion molding die.

### RELATED ART DOCUMENT

### PATENT DOCUMENT

Patent Document 1: Japanese Patent Application Laid-Open Publication No. 2011-173263

### SUMMARY OF THE INVENTION

### PROBLEMS TO BE SOLVED BY THE INVENTION

A film (resin film) can be manufactured by extrusion molding. In the case, it is desired to manufacture a film having a uniform thickness.

Other problems and novel characteristics will be apparent from the description of the specification and the accompanying drawings.

### MEANS FOR SOLVING THE PROBLEMS

An extrusion molding die according to one embodiment includes: a first opening for supplying molten resin; a second opening for discharging the molten resin; and a resin flow path extending from the first opening to the second opening. The resin flow path includes: a resin introduction part connected to the first opening; a manifold connected to the resin introduction part; and a first land part and a second land part arranged between the manifold and the second opening sequentially in a first direction extending from the manifold to the second opening. The second opening extends in a second direction perpendicular to the first direction. A thickness of the second land part differs from a thickness of the first land part. In an assumption that a virtual line passing through a center of the resin introduction part and extending to the second opening in the first direction is a first central axis, a boundary between the first land part and the second land part includes: a first region including a portion intersecting the first central axis; a second region arranged between the first region and one end of the boundary between the first land part and the second land part in the second direction; and a third region arranged between the first region and the other end of the boundary between the first land part and the second land part in the second direction. A first flow path length extending from the boundary between the first land part and the second land part to the second opening is configured to: in the second region, to gradually change at a first change rate as it gets closer from the first region side to the one end; in the third region, to gradually change at the first change rate as it gets closer from the first region side to the other end; and in the first region, to be constant or change at a smaller change rate than the first change rate.

An extrusion molding die according to another embodiment includes: a first opening for supplying molten resin; a second opening for discharging the molten resin; and a resin flow path extending from the first opening to the second opening. The resin flow path includes: a resin introduction part connected to the first opening; a manifold connected to the resin introduction part; and a land part arranged between the manifold and the second opening to be continuously formed to the manifold. The second opening extends in a second direction perpendicular to the first direction. A thickness of the land part is equal to or smaller than a thickness of the manifold. In an assumption that a virtual line passing through a center of the resin introduction part and extending to the second opening in the first direction is a first central axis, a boundary between the manifold and the land part includes: a first region including a portion intersecting the first central axis; a second region arranged between the first region and one end of the boundary between the manifold and the land part in the second direction; and a third region arranged between the first region and the other end of the boundary between the manifold and the land part in the second direction. A first flow path length extending from the boundary between the manifold and the land part to the second opening is configured to: in the second region, to be gradually made smaller at a first change rate as it gets closer from the first region side to the one end; in the third region, to be gradually made smaller at the first change rate as it gets closer from the first region side to the other end; and in the first region, to be constant or change at a smaller change rate than the first change rate.

### EFFECTS OF THE INVENTION

According to the above-described one embodiment, a film having a uniform thickness can be manufactured.

### BRIEF DESCRIPTIONS OF THE DRAWINGS

[FIG. 1] is an explanatory view illustrating a schematic configuration of an extrusion molding apparatus in one embodiment.
[FIG. 2] is an enlarged cross-sectional view of an extrusion molding die in one embodiment.
[FIG. 3] is an enlarged cross-sectional view of the extrusion molding die in one embodiment.
[FIG. 4] is a cross-sectional view of the extrusion molding die in one embodiment.
[FIG. 5] is a perspective view of a resin flow path in the extrusion molding die in one embodiment.
[FIG. 6] is a plan view illustrating the resin flow path in the extrusion molding die in one embodiment.
[FIG. 7] is a plan view illustrating a resin flow path in an extrusion molding die according to a study example of FIG. 6.
[FIG. 8] is a cross-sectional view illustrating a cross-sectional shape of film-shaped molten resin discharged from the die illustrated in FIG. 6.
[FIG. 9] is a cross-sectional view illustrating a cross-sectional shape of film-shaped molten resin discharged from the die illustrated in FIG. 7.
[FIG. 10] is an enlarged plan view illustrating a resin flow path in an extrusion molding die according to a modification example of FIG. 6.
[FIG. 11] is an enlarged plan view illustrating a resin flow path in an extrusion molding die according to another modification example of FIG. 6.
[FIG. 12] is a plan view illustrating a resin flow path in an extrusion molding die according to another modification example of FIG. 6.
[FIG. 13] is an enlarged cross-sectional view along a line B2 - B2 illustrated in FIG. 12.
[FIG. 14] is a plan view illustrating a resin flow path in an extrusion molding die according to a modification example of FIG. 12.
[FIG. 15] is an enlarged plan view illustrating the periphery of a resin introduction part illustrated in FIG. 14 in an enlarged manner.
[FIG. 16] is a plan view illustrating a resin flow path in an extrusion molding die according to another modification example of FIG. 6.
[FIG. 17] is an enlarged cross-sectional view along a line C1 - C1 illustrated in FIG. 16.
[FIG. 18] is an enlarged cross-sectional view along a line C2 - C2 illustrated in FIG. 16.
[FIG. 19] is a plan view illustrating a resin flow path in an extrusion molding die according to another modification example of FIG. 6.
[FIG. 20] is an enlarged cross-sectional view along a line D1 - D1 illustrated in FIG. 19.
[FIG. 21] is an enlarged cross-sectional view along a line D2 - D2 illustrated in FIG. 19.

### DETAILED DESCRIPTION OF PREFERRED EMBODIMENTS

Hereinafter, embodiments will be described in detail with reference to the accompanying drawings. Note that components having the same function are denoted with the same reference symbols throughout all the drawings for describing the embodiments, and the repetitive description thereof will be omitted. In addition, the description of the same or similar portions is not repeated in principle unless otherwise particularly required in the following embodiments.

### (Embodiment)

### <Entire Configuration of Film Manufacturing Apparatus>

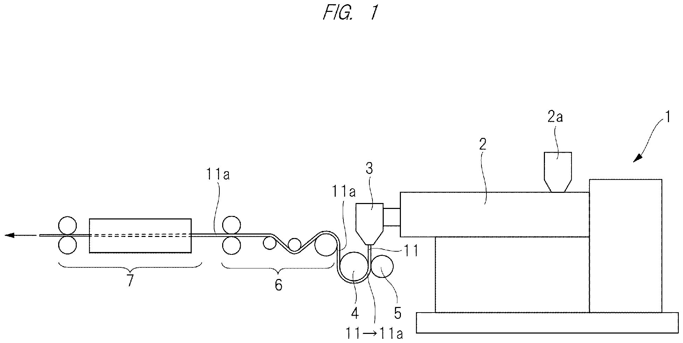

An entire configuration of a film manufacturing apparatus (extrusion molding apparatus, extrusion molding machine) 1 in the present embodiment will be described with reference to FIG. 1. FIG. 1 is an explanatory view (side view) illustrating a schematic configuration of a film manufacturing apparatus 1 in the present embodiment.

In extrusion molding, a melted resin material (molten resin) is extruded and continuously molded. The molten resin is molded into a predetermined cross-sectional shape (film shape) by passing through a die (mold), and is cooled and solidified after passing through the die.

Note that a meaning of the term "melting" described in the present application is not limited to the case of melting by heat, and also includes a case of melting with a solvent or the like. Accordingly, a meaning of the term "molten resin" can include not only a case where resin is melted by heating but also a case where the resin is melted with a solvent, a case where the resin is melted by a microwave and the like. In addition, liquid resin can also be included in "molten resin".

As illustrated in FIG. 1, the film manufacturing apparatus 1 in the present embodiment includes an extruder (extruder machine) 2, a die (mold) 3, a cooling roll (cast roll) 4, a touch roll 5, and a puller (puller machine) 6.

The extruder 2 melts a resin material, and extrudes the melted resin material (molten resin) toward the die 3. The die 3 molds the molten resin extruded from the extruder 2 into a shape of a film (sheet). The cooling roll 4 rapidly cools and solidifies the molten resin discharged from the die 3. The cooling roll 4 can also be regarded as a cooling jig (cooler) for cooling the molten resin discharged from the die 3. The touch roll 5 sandwiches the resin between itself and the cooling roll 4, and passes the resin. The touch roll 5 may not be provided. The puller 6 pulls the resin film solidified by the cooling roll 4, and conveys the resin film to a take-up winder (not illustrated). Although the extruder 2 further includes a take-up winder (not illustrated) that winds up the resin film conveyed from the puller 6 and a cutter (not illustrated) that cuts the wound resin film, illustration thereof is omitted in FIG. 1.

Next, an outline of an operation of the film manufacturing apparatus 1, in other words, a film manufacturing method using the film manufacturing apparatus 1 will be described.

First, the film manufacturing method according to the present embodiment includes a step of supplying a raw material (resin material) from a resin input port 2a of the extruder 2 into the extruder 2. The resin material supplied into the extruder 2 is melted by, for example, being heated while being fed forward by rotation of a screw in the extruder 2. The resin material (molten resin) melted in the extruder 2 is extruded from an end of the extruder 2 toward the die 3. In other words, the film manufacturing method according to the present embodiment includes a step of extruding molten resin 11 from the extruder 2 and supplying the molten resin to the die 3. The molten resin extruded from the extruder 2 is supplied to the die 3, passes through the die 3 (more specifically, through a resin flow path 23 described later in the die 3), and is discharged from the die 3 toward the cooling roll 4. The molten resin supplied from the extruder 2 to the die 3 is molded into a predetermined cross-sectional shape (film shape herein) when passing through the die 3. However, at the stage of the discharge from the die 3, the resin material (resin material molded into the film shape) is still maintained in a molten state. The film manufacturing method according to the present embodiment includes a step of molding the molten resin 11 into the film shape by using the die 3. Accordingly, the molten resin 11 to be discharged from the die 3 as illustrated in FIG. 1 is the molten resin molded into the film shape (film-shaped molten resin, molten resin film). The molten resin 11 discharged from the die 3 reaches the rotating cooling roll 4, and is rapidly cooled and solidified while rotating together with the cooling roll 4 while sticking to a surface of the cooling roll 4. In other words, the film manufacturing method according to the present embodiment includes a step of cooling the film-shaped molten resin 11 discharged from the die 3. In a case with the touch roll 5, the molten resin 11 or a resin film 11a passes through a narrow space (gap) between the cooling roll 4 and the touch roll 5. The molten resin 11 discharged from the die 3 is solidified by the cooling roll 4 to be the resin film 11a with the solidified state, and this resin film 11a is pulled by the puller 6, and is conveyed to a stretching machine 7. The resin film 11a conveyed to the stretching machine 7 is stretched (elongated). The stretched resin film 11a is conveyed to the take-up winder (not illustrated). The resin film 11a conveyed to the take-up winder is wound up into a roll shape, and is cut by the cutter (not illustrated) as needed. Note that FIG. 1 illustrates a configuration example including the stretching machine 7. However, the resin film 11a may be not stretched but be conveyed to the take-up winder (not illustrated).

### <Die>

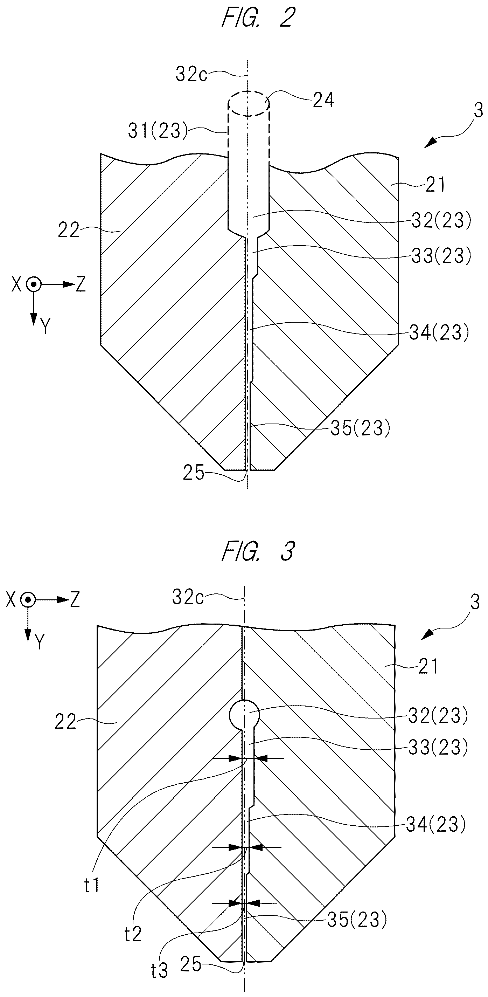

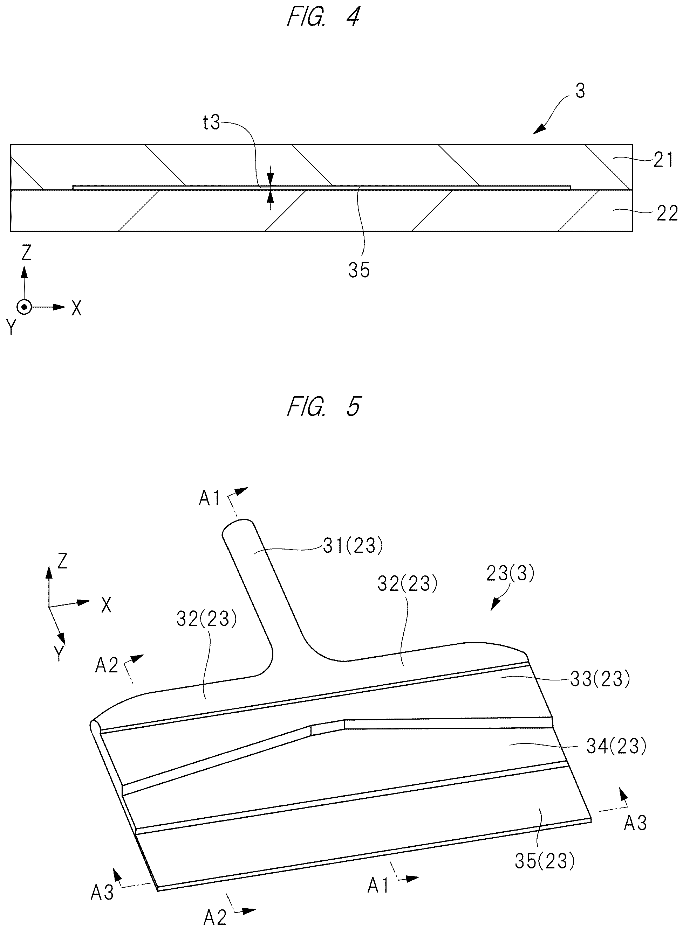

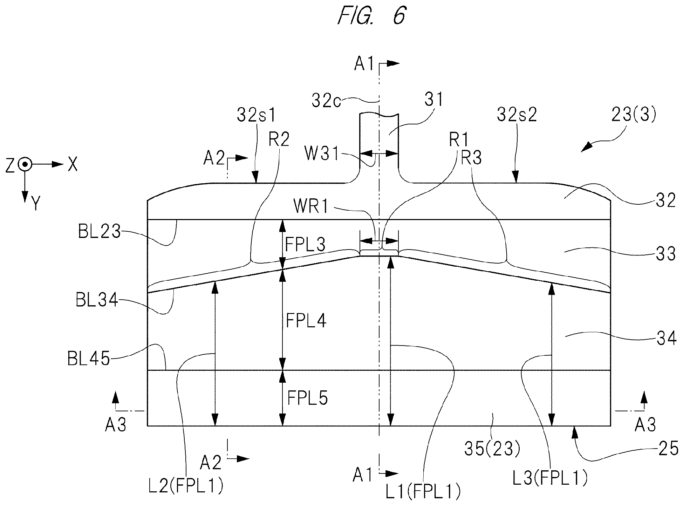

Next, a configuration of the extrusion molding die 3 in the present embodiment will be described with reference to FIGs. 2 to 6. FIGs. 2 to 4 are cross-sectional views of the extrusion molding die 3 in the present embodiment. FIG. 5 is a perspective view illustrating the resin flow path 23 in the extrusion molding die 3 in the present embodiment. FIG. 6 is a plan view illustrating the resin flow path 23 in the extrusion molding die 3 in the present embodiment. FIG. 2 substantially corresponds to an enlarged cross-sectional view of the die 3 at a position along a line A1 - A1 illustrated in FIGs. 5 and 6, FIG. 3 substantially corresponds to an enlarged cross-sectional view of the die 3 at a position along a line A2 - A2 illustrated in FIGs. 5 and 6, and FIG. 4 substantially corresponds to a cross-sectional view of the die 3 at a position along a line A3 - A3 illustrated in FIGs. 5 and 6.

In addition, FIGs. 2 to 6 each illustrate an X-direction, a Y-direction, and a Z-direction. The X-direction, the Y-direction, and the Z-direction are directions intersecting one another, and more specifically directions perpendicular to one another. The X-direction and the Y-direction are perpendicular to each other, and the Z-direction is perpendicular to the X-direction and the Y-direction. The Y-direction is a direction extending from a manifold 32 toward an opening 25. Accordingly, a main flow direction of the molten resin through land parts 33, 34 and 35 in a resin introduction part 31 is the Y-direction. An extension direction (long-side direction) of the opening 25 is the X-direction. A width direction of the manifold 32 and 34, 35 in the resin introduction part 31 is the X-direction, and a width direction of the film-shaped molten resin 11 (see FIG. 1) discharged from the opening 25 is also the X-direction. The Z-direction is a thickness direction of the land parts 33, 34 and 35 in the resin introduction part 31, and a thickness direction of the film-shaped molten resin 11 discharged from the opening 25 is also the Z-direction. Accordingly, the respective thicknesses of the land parts 33, 34, and 35, the opening 25, and the molten resin 11 (see FIG. 1) each correspond to a thickness (dimension) in the Z-direction when referred to in the following description.

As illustrated in FIGs. 2 and 3, the die 3 has paired die members (die bodies, molds) 21 and 22. The die member 21 and the die member 22 are each preferably made of a metal material. The die member 21 and the die member 22 are fixed to each other by a fixing member (not illustrated) such as a bolt.

The resin flow path 23 is formed in the die 3. The resin flow path 23 is formed between the die member 21 and the die member 22. The resin flow path 23 is a space formed between the die member 21 and the die member 22 and is a space where the molten resin supplied (introduced) to the die 3 can flow (move). The resin flow path 23 can be regarded as a flow path which is formed in the die 3 and through which the molten resin passes. The resin flow path 23 is surrounded by the die members 21 and 22.

Accordingly, the die 3 includes the die members 21 and 22, the resin flow path 23 formed between the die members 21 and 22, and the fixing member (such as bolt) that fixes the die members 21 and 22 to each other. The die 3 is a so-called T die.

In addition, the die 3 further includes an opening (supply port, introduction port) 24 for supplying (introducing) the molten resin into the die 3 and an opening (discharge port) 25 for discharging the molten resin to outside the die 3, and the resin flow path 23 is a flow path (a molten resin flow path) through which the molten resin supplied from the opening 24 flows until it is discharged from the opening 25. The molten resin supplied from the extruder 2 to the opening 24 in the die 3 is discharged from the opening 25 to outside the die 3 through the resin flow path 23. Accordingly, the die 3 includes the opening 24 for supplying the molten resin, the opening 25 for discharging the molten resin, and the resin flow path 23 extending from the opening 24 to the opening 25.

Next, details of the resin flow path 23 will be described with reference to FIGs. 2 to 6.

The resin flow path 23 includes: the manifold 32, the resin introduction part 31 that guides, to the manifold 32, the molten resin supplied (introduced) from the opening 24; and a slit connecting to the manifold 32. The slit includes three regions (the land parts 33, 34, and 35) respectively having different thicknesses from one another. In other words, the resin flow path 23 includes the resin introduction part 31, the manifold 32, and the land parts (slits, regions) 33, 34, and 35. In the flow direction of the molten resin, the resin introduction part 31, the manifold 32, the land part 33, the land part 34, and the land part 35 are sequentially arranged. Accordingly, the land part 33, the land part 34, and the land part 35 are arranged between the manifold 32 and the opening 25 sequentially in the direction (i.e., the Y-direction) extending from the manifold to the opening 25.

The opening 24 as an inflow port of the molten resin in the die 3 is connected to the resin introduction part 31, and the opening 25 as a discharge port of the molten resin in the die 3 is connected to the land part 35. The opening 25 is an opening formed by the land part 35 reaching a surface of the die 3. That is, a downstream-side end surface of the land part 35 is the opening 25. Accordingly, a shape of the opening 25 is substantially the same as a cross-sectional shape of the land part 35 (cross-sectional shape thereof substantially perpendicular to the Y-direction), and the thickness (dimension in the Z-direction) of the opening 25 is substantially the same as the thickness (in the Z-direction) of the land part 34.

The shape (planar shape) of the opening 25 is preferably a rectangular shape. Therefore, the cross-sectional shape of the land part 35 (cross-sectional shape thereof substantially perpendicular to the Y-direction) is preferably a rectangular shape. Accordingly, the opening 25 has a major axis (long side) and a minor axis (short side), and the X-direction is a major-axis direction (long-side direction) while the Z-direction is a minor-axis direction (short-side direction).

The molten resin 11 (see FIG. 1) extruded from the extruder 2 (see FIG. 1) flows in from the opening 24 of the die 3, sequentially passes through the resin induction part 31, the manifold 32, the land part 33, the land part 34, and the land part 35, and is discharged from the opening 25 of the die 3.

The thickness of the resin film 11a to be formed can be controlled by the thickness of the opening 25 (the thickness of the land part 34), a flow rate (flow velocity) of the molten resin 11 discharged from the opening 25 of the die 3, a pull speed (rotation speed) of the cooling roll 4, and the like. Even in a case without the change in the thickness of the opening 25 (the thickness of the land part 34), the lower the flow rate (flow velocity) of the molten resin 11 to be discharged from the opening 25 of the die 3 is, the smaller the thickness of the resin film 11a to be formed is. In addition, the higher the pull speed (rotation speed) of the cooling roll 4 (see FIG. 1) is, the smaller the thickness of the resin film 11a to be formed is. The opening 25 can function as a lip port (lip opening) that discharges the molten resin, and the land part 35 can function as a lip land part.

The manifold 32 extends in the X-direction, and is connected to the resin introduction part 31 at the vicinity of the middle (the vicinity of the middle in the X-direction) of the manifold 32. The molten resin 11 (see FIG. 1) supplied from the extruder 2 (see FIG. 1) to the opening 24 of the die 3 flows into the manifold 32 through the resin introduction part 31. The molten resin 11 flowed from the resin introduction part 31 into the manifold 32 can move in the manifold 32 in the extension direction (X-direction herein) of the manifold 32, and can move to both ends of the manifold 32. Accordingly, the molten resin 11 (see FIG. 1) flowed from the resin induction part 31 into the manifold 32 spreads in the manifold 32 in a lateral direction (X-direction). The manifold 32 has a function of guiding the molten resin 11 flowed from the resin introduction part 31 to flow toward both end sides of the manifold 32. Since the molten resin 11 spreads over the entire manifold 32, the molten resin 11 moves from the entire manifold 32 toward the land part 33. A cross-sectional shape (cross-sectional shape substantially perpendicular to the X-direction) of the manifold 32 can be, for example, a circular shape. Therefore, a three-dimensional shape of the manifold 32 can be, for example, a cylindrical shape.

The land part 33 is integrally connected to the manifold 32, the land part 34 is integrally connected to the manifold 32, and the land part 35 is integrally connected to the land part 34. Accordingly, in the Y-direction, the land part 33 is arranged at a position adjacent to the manifold 32, the land part 34 is arranged at a position adjacent to the land part 33, and the land part 35 is arranged at a position adjacent to the land part 34. However, the land part 33 is located on the downstream side of the manifold 32, the land part 34 is located on the downstream side of the land part 33, and the land part 35 is located on the downstream side of the land part 34.

In the present embodiment, note that the term "downstream side" means the downstream side of the flow of the molten resin 11 (see FIG. 1), and the term "upstream side" means the upstream side of the flow of the molten resin 11. Therefore, the side close to the opening 25 is the downstream side, and the side far from the opening 25 is the upstream side.

The molten resin 11 flowed from the resin induction part 31 into the manifold 32 spreads over the entire manifold 32, and flows from the entire manifold 32 into the land part 33. The molten resin flowed from the manifold 32 into the land part 33 flows into the land part 34 through the land part 33, further flows into the land part 35 through the land part 34, and still further is discharged from the opening 25 to outside the die 3 through the land part 35.

The land parts 33, 34, and 35 each have a slit-like (plate-like) shape having a plane (main surface) substantially parallel to the X-direction and the Y-direction. A relationship among the respective thicknesses of the land parts 33, 34 and 35 is as follows.

That is, as illustrated in FIG. 3, the thickness t2 of the land part 34 is smaller than the thickness t1 of the land part 33 (t1 > t2), and the thickness t3 of the land part 35 is smaller than the thickness t2 of the land part 34 (t2 > t3). In addition, the thickness of the land part 33 is uniform, the thickness of the land part 34 is uniform, and the thickness of the land part 35 is uniform.

As one example of the thicknesses t1, t2, and t3, the thickness t1 is about 2 to 20 mm, the thickness t2 is about 0.8 to 10 mm, and the thickness t3 is about 0.4 to 6 mm.

In addition, the resin introduction part 31 and the manifold 32 are larger in dimension in the thickness direction (Z-direction) than the land parts 33, 34, and 35. For example, if the cross-sectional shape (cross-sectional shape substantially perpendicular to the X-direction) of the manifold 32 is a circular shape, its diameter is larger than the respective thicknesses t1, t2, and t3 of the land parts 33, 34, and 35. Accordingly, movement of the molten resin 11 (see FIG. 1) is easier in the resin induction part 31 and the manifold 32 than in the land parts 33, 34 and 35. Therefore, the molten resin 11 can be spread over the entire manifold 32, and can be flowed from the entire manifold 32 into the land part 33.

The width of the land part 33, the width of the land part 34, and the width of the land part 35 are the same as one another. Accordingly, the respective both ends (both side surfaces) of the land parts 33, 34, and 35 match in position with one another, and are arranged in the Y-direction. In addition, the respective both ends (both side surfaces) of the land parts 33, 34, and 35 are substantially parallel to the Y-direction.

In a plan view, a planar shape of the land part 33 is line-symmetrical with respect to a central axis 32c. In addition, in a plan view, a planar shape of the land part 34 is line-symmetrical with respect to the central axis 32c. In addition, in a plan view, a planar shape of the land part 35 is line-symmetrical with respect to the central axis 32c. That is, each of the land parts 33, 34, and 35 is symmetrical with respect to the central axis 32c along the Y-direction.

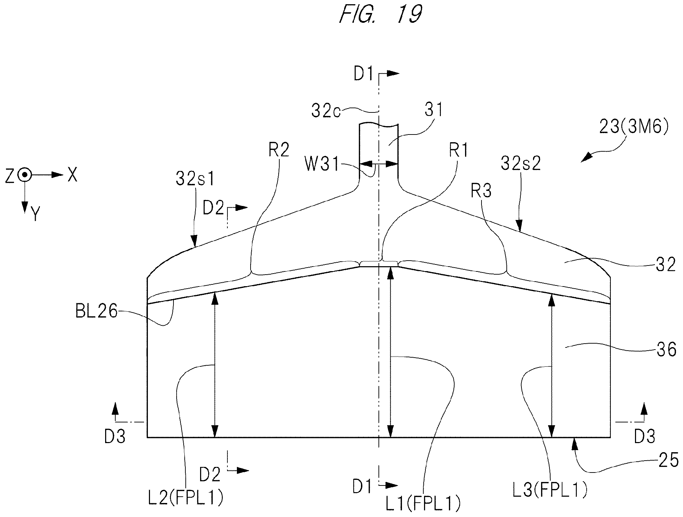

In the explanation for the land parts 33, 34, 35, and 36 including a land part 36 illustrated in FIG. 19 described later, the term "width" corresponds to a width (dimension) in the X-direction, the term "end" corresponds to an end in the X-direction, the term "both ends" corresponds to both ends in the X-direction, and the term "middle" or "center" corresponds to the middle in the X-direction. In addition, in the explanation for the land parts 33, 34, 35, and 36, the term "plan view" corresponds to viewing in a plane parallel to the X-direction and the Y-direction, and the term "planar shape" corresponds to a planar shape in the viewing in the plane parallel to the X-direction and the Y-direction. In addition, in the explanation for the land parts 33, 34, 35, and 36, the term "central axis (the central axis 32c illustrated in FIGs. 2, 3, and 6)" corresponds to a straight line passing through the middle of the land parts 33, 34, 35, and 36 in the X-direction and being parallel to the Y-direction. The central axis 32c is a virtual line (virtual straight line) passing through the center of the resin introduction part 31 illustrated in FIG. 2. In an example of the present embodiment, the opening 24 exists at the top of the resin introduction part 31 extending in the Y-direction. Accordingly, the central axis 32c passes through the center of the opening 24.

In a plan view illustrated in FIG. 6, a boundary BL23 between the manifold 32 and the land part 33 is parallel to the X-direction. In addition, in the plan view, a boundary BL45 between the land part 34 and the land part 35 is parallel to the X-direction. In addition, an extension direction of the opening 25 located at a downstream-side end of the land part 35 is parallel to the X-direction.

On the other hand, in the plan view illustrated in FIG. 6, a boundary BL34 between the land part 33 and the land part 34 is not parallel to the X-direction, and includes portions (a region R2 and a region R3) inclining with respect to the X-direction. The boundary BL34 between the land part 33 and the land part 34 includes: a region R1 including a portion intersecting the central axis 32c; the region R2 arranged between the region R1 and one end of the boundary BL34 between the land part 33 and the land part 34 in the X-direction; and the region R3 arranged between the region R1 and the other end of the boundary BL34 between the land part 33 and the land part 34 in the X-direction. In the X-direction, the region R1 is at the middle of the boundary BL34. In the example illustrated in FIG. 6, the boundary BL34 in the region R1 is parallel to the X-direction. In other words, the boundary BL34 in the region R1 is parallel to the extension direction of the opening 25.

In attention paid to respective inclination angles of the regions R1, R2, and R3 with respect to the X-direction, the inclination angles can be expressed as follows. That is, the boundary BL34 in the region R2 inclines to form an angle that is less than 90 degrees with respect to the X-direction. The boundary BL34 in the region R3 inclines to form an angle that is less than 90 degrees with respect to the X-direction. An angle formed between the boundary BL34 and the X-direction in the region R1 is less than respective angles (but including 0 degree) formed between the boundary BL34 and the X-direction in the region R2 and the region R3.

In the example illustrated in FIG. 6, an angle formed between the region R2 in the boundary BL34 and the X-direction is, for example, about 1 to 10 degrees. In addition, an angle formed between the region R3 in the boundary BL34 and the X-direction is the same as an angle formed between the region R2 in the boundary BL34 and the X-direction, and is, for example, about 1 to 10 degrees.

Next, in each of the regions R1, R2, and R3, a flow path length FPL1 of a resin flow path extending from the boundary BL34 to the opening 25 will be described. The flow path length FPL1 illustrated in FIG. 6 is a total value of a flow path length FPL4 of the land part 34 and a flow path length FPL5 of the land part 35. A flow path length FPL3 corresponds to a dimension (length) of the land part 33 in the Y-direction, the flow path length FPL4 corresponds to a dimension (length) of the land part 34 in the Y-direction, and the flow path length FPL5 corresponds to a dimension (length) of the land part 35 in the Y-direction. In each of the land parts 33, 34, and 35, the molten resin flows (moves) mainly in the Y-direction. Accordingly, the flow path length FPL3 can be regarded as a dimension (length) of the land part 33 in a flow direction of the molten resin, and the flow path length FPL4 can be regarded as a dimension (length) of the land part 34 in the flow direction of the molten resin. Therefore, the flow path length FPL3 defines a flow distance of the molten resin in the land part 33, the flow path length FPL4 defines a flow distance of the molten resin in the land part 34, and the flow path length FPL5 defines a flow distance of the molten resin in the land part 35.

In the example of the present embodiment, the boundary BL45 between the land part 34 and the land part 35 is parallel to the X-direction as the extension direction of the opening 25. Therefore, the flow path length FPL5 is constant regardless of a position in the X-direction. On the other hand, as described above, the boundary BL34 between the land part 33 and the land part 34 includes the portion inclining with respect to the X-direction as the extension direction of the opening 25. Accordingly, the flow path length FPL4 of the land part 34 is not constant, and changes depending on a position in the X-direction. This point will be described in detail below.

Note that the flow path length FPL1 extending from the boundary BL34 to the opening 25 will be described below. As described above, in the present embodiment, the flow path length FPL5 is constant regardless of the position in the X-direction. Therefore, description of the flow path length FPL1 described below can be replaced with description of the flow path length FPL4. In FIG. 6, in the flow path length FPL1, a length of a flow path extending from the region R1 in the boundary BL34 to the opening 25 in the Y-direction is indicated as a flow path length L1. In addition, in the flow path length FPL1, a length of a flow path extending from the region R2 in the boundary BL34 to the opening 25 in the Y-direction is indicated as a flow path length L2. In addition, in the flow path length FPL1, a length of a flow path extending from the region R3 in the boundary BL34 to the opening 25 in the Y-direction is indicated as a flow path length L3.

Specifically, in the X-direction, the flow path length FPL1 in the region R1 in the vicinity of the middle of the boundary BL34 is maximized (longest). In the example illustrated in FIG. 6, a value of the flow path length L1 is constant regardless of the position in the X-direction.

In the region R2 in the boundary BL34, the flow path length is gradually made smaller as it gets closer from the region R1 side to the one end of the boundary BL34. The angle formed between the region R2 in the boundary BL34 and the X-direction is constant. Therefore, when the angle formed between the region R2 and the X-direction is defined as a change rate of the flow path length FPL1, the change rate can be expressed as follows. That is, the flow path length FPL1 (the flow path length L2) in the region R2 is gradually made smaller at a first change rate as it gets closer from the region R1 side to the one end of the boundary BL34.

The region R3 in the boundary BL34 is gradually made smaller as it gets closer from the region R1 side to the other end of the boundary BL34. An absolute value of an angle formed between the region R3 in the boundary BL34 and the X-direction is the same as an absolute value of an angle formed between the region R2 in the boundary BL34 and the X-direction, and is constant. Accordingly, when the angle formed between the region R3 and the X-direction is defined as a change rate of the flow path length FPL1, the angle can be expressed as follows. That is, the flow path length FPL1 (the flow path length L3) in the region R3 is gradually made smaller at the above-described first change rate as it gets closer from the region R1 side to the other end of the boundary BL34.

The die 3 illustrated in FIG. 6 can function to make a flow rate distribution of the molten resin in the X-direction (width direction) uniform. A reason for this point is as follows.

The molten resin flowed from the resin induction part 31 into the manifold 32 spreads over the entire manifold 32, and the molten resin flows from the entire manifold 32 into the land part 33. However, in the vicinity of the middle in the X-direction, the flow of the molten resin from the manifold 32 into the land part 33 is easy because of being close to the resin introduction part 31. On the other hand, as getting closer to both end sides in the X-direction, the flow of the molten resin from the manifold 32 into the land part 33 tends to be more difficult because of being farther from the resin introduction part 31. In reflection of this point, the vicinity of the middle in the X-direction has a relatively high inflow pressure of the molten resin that flows from the manifold 32 into the land part 33, while the inflow pressure of the molten resin that flows from the manifold 32 into the land part 33 tends to be made smaller as it gets closer to both end sides in the X-direction.

Therefore, in the case of the die 3, the flow path length FPL4 of the land part 34 (in the present embodiment, that can also be regarded as a total flow path length FPL1 of the land part 34 and the land part 35) is maximized in the region R1 in the vicinity of the center, and is gradually made smaller as it gets closer from the region R1 to both ends (both ends in the X-direction). Since the thickness t2 of the land part 34 is smaller than the thickness t1 of the land part 33, the flow of the molten resin is more difficult in the land part 34 than in the land part 33. That is, if the flow distance of the molten resin is the same between the land part 33 and the land part 34, the flow path resistance is higher in the land part 34 than in the land part 33. That is, the flow path resistance per unit distance is higher in the land part 34 than in the land part 33. Note that respective flow path resistances of the land parts 33, 34, and 35 per unit distance are made larger as their thicknesses get smaller.

When the flow path length FPL1 is maximized in the region R1 in the boundary BL34 while being gradually made smaller as it gets closer from the region R1 to both ends, the total of the flow path resistance in the land part 33 and the flow path resistance in the land part 34 is maximized in the region R1, and is gradually made smaller as it gets closer from the region R1 to both ends (both ends in the X-direction). In this manner, the inflow pressure of the molten resin at the time of the flow from the land part 34 into the land part 35 can be substantially made constant regardless of the position in the X-direction. That is, the flow path resistance at the time of passing of the molten resin through the land part 33 and the land part 34 is set to be gradually made smaller as it gets closer from the middle to both ends in the X-direction in consideration of the fact that the inflow pressure at the time of the flow of the molten resin from the manifold 32 into the land part 33 is gradually made smaller as it gets closer from the region R1 to both ends in the X-direction. In this manner, ununiformity of the inflow pressure at the time of the flow of the molten resin from the manifold 32 into the land part 33 can be cancelled by ununiformity of the flow path resistances in the land parts 33 and 34. As a result, the ununiformity of the inflow pressure at the time of the flow of the molten resin from the land part 34 into the land part 35 can be suppressed, and the inflow pressure of the molten resin at the time of the flow into the land part 35 can be substantially made constant regardless of the position in the X-direction. Further, the thickness t3 (see FIG. 3) of the land part 35 is constant regardless of the position in the X-direction. Accordingly, the flow rate (flow velocity) of the molten resin to be discharged from the opening 25 located at the downstream-side end of the land part 35 can be substantially made constant regardless of the position in the X-direction. That is, the die 3 can function to make the flow rate distribution of the molten resin in the X-direction (width direction) uniform.

If the flow rate distribution of the molten resin to be discharged from the opening 25 is uniform, the film thickness of the film-shaped molten resin to be discharged from the opening 25 is uniform. In other words, a film having a uniform thickness can be manufactured by using the die 3 according to the present embodiment. In the film manufacturing apparatus illustrated in FIG. 1, in order to make the thickness of the resin film 11a to be discharged from the puller 6 or the stretching machine 7 uniform, it is necessary to make the thickness of the film-shaped molten resin 11 discharged from the die 3 uniform. In the case of the die 3 according to the present embodiment, the film-shaped molten resin 11 can be molded to have the uniform thickness, thereby making the thickness of the resin film 11a to be discharged from the puller 6 or the stretching machine 7 uniform.

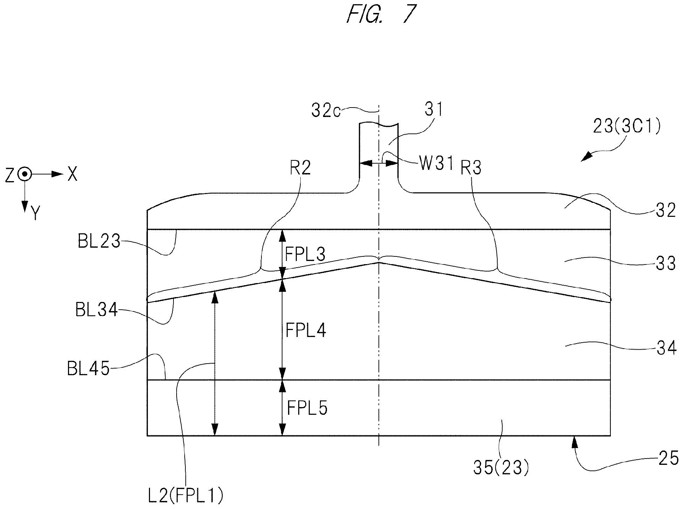

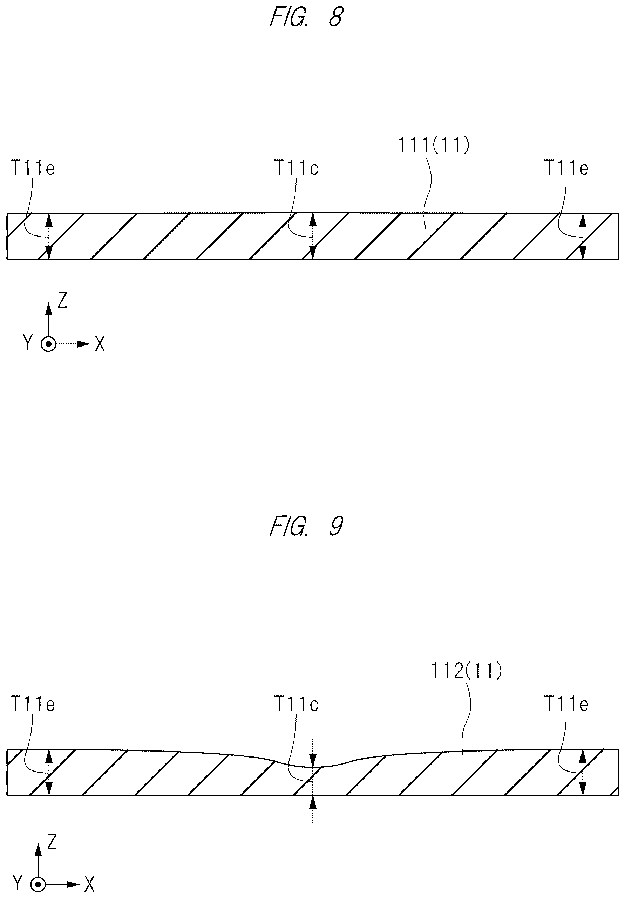

Incidentally, a die 3C1 illustrated in FIG. 7 according to a study example differs from the die 3 illustrated in FIG. 6 in that the region R1 illustrated in FIG. 6 does not exist while the region R2 and the region R3 are connected to each other at a position intersecting a central axis 32c. FIG. 7 is a plan view illustrating a resin flow path in an extrusion molding die as a study example of FIG. 6. FIG. 8 is a cross-sectional view illustrating a cross-sectional shape of the film-shaped molten resin discharged from the die illustrated in FIG. 6. FIG. 9 is a cross-sectional view illustrating a cross-sectional shape of film-shaped molten resin discharged from the die illustrated in FIG. 7.

In a case without consideration of a width W31 (a length in the X-direction) of the resin introduction part 31 illustrated in FIG 7, the die 3C1 illustrated in FIG. 7 can also make the flow rate distribution of the molten resin in the X-direction (width direction) uniform. However, as a result of detailed study made by the inventors of the present application, it has been found that the die 3C1 illustrated in FIG. 7 makes a thickness T11c in the vicinity of the middle in the X-direction smaller than a thickness T11e in the vicinity of both ends, as seen from a molten resin film 112 in FIG. 9. On the other hand, in a case of a molten resin film 111 discharged from the die 3 (see FIG. 6) in the present embodiment as illustrated in FIG. 8, a difference between a thickness T11c in the vicinity of the middle and a thickness T11e in the vicinity of both ends is negligibly small so that these thicknesses are uniform.

A reason why the molten resin film 111 illustrated in FIG. 8 is uniform in thickness relative to the molten resin film 112 illustrated in FIG. 9 is as follows.

That is, the inflow pressure of the molten resin in a portion of the boundary BL34 illustrated in FIGs. 6 and 7, the portion overlapping the resin introduction part 31 in the Y-direction, is substantially constant. Strictly speaking, as described later, although the inflow pressure distribution in the X-direction may not be constant, the ununiformity of the inflow pressure is smaller than the difference between the vicinity of both ends and the vicinity of the middle of the land 34 in the X-direction.

On the other hand, in a viewpoint of the flow path resistance, in the case of the die 3C1 illustrated in FIG. 7, the flow path resistance of the molten resin in the portion overlapping the resin introduction part 31 in the Y-direction is not constant, and the flow path resistance is made larger as it gets closer to the central axis 32c. Accordingly, the flow rate (flow velocity) of the molten resin 11 (see FIG. 9) to be discharged from the opening 25 in the vicinity of the middle in the X-direction is smaller than that in the vicinity of both ends in the X-direction. As a result, in the case of the molten resin film 112 illustrated in FIG. 9, it is conceivable that the thickness T11c in the vicinity of the middle in the X-direction is smaller than the thickness T11e in the vicinity of both ends. In other words, in the example illustrated in FIG. 7, the portion overlapping the resin introduction part 31 has unbalance between the ununiformity of the inflow pressure and the ununiformity of the flow path resistances in the land parts 33 and 34 at the time of the flow of the molten resin from the manifold 32 into the land part 33, and therefore, has a place where the flow path resistance is rather too high.

On the other hand, in the case of the die 3C1 illustrated in FIG. 6, in the region R1, the flow path length FPL1 from the boundary BL34 between the land part 33 and the land part 34 to the opening 25 is constant or changes at a smaller change rate than the first change rate in the region R2 and the region R3. In the example illustrated in FIG. 6, the flow path length FPL1 in the region R1 is substantially constant. Accordingly, in the case of the die 3, the ununiformity of the inflow pressure and the ununiformity of the flow path resistances in the land parts 33 and 34 at the time of the flow of the molten resin from the manifold 32 into the land part 33 can be balanced at all positions in the X-direction, including the potion overlapping the resin introduction part 31 in the Y-direction. As a result, in the case of the die 3, even in a case with the consideration of the width W31 of the resin introduction part 31, the flow rate distribution of the molten resin in the X-direction (width direction) can be made uniform in an entire range. As a result, in the molten resin film 111 illustrated in FIG. 8, the difference between the thickness T11c in the vicinity of the middle and the thickness T11e in the vicinity of both ends is negligibly small, and these thicknesses are uniform.

### <As to Range of Region R1>

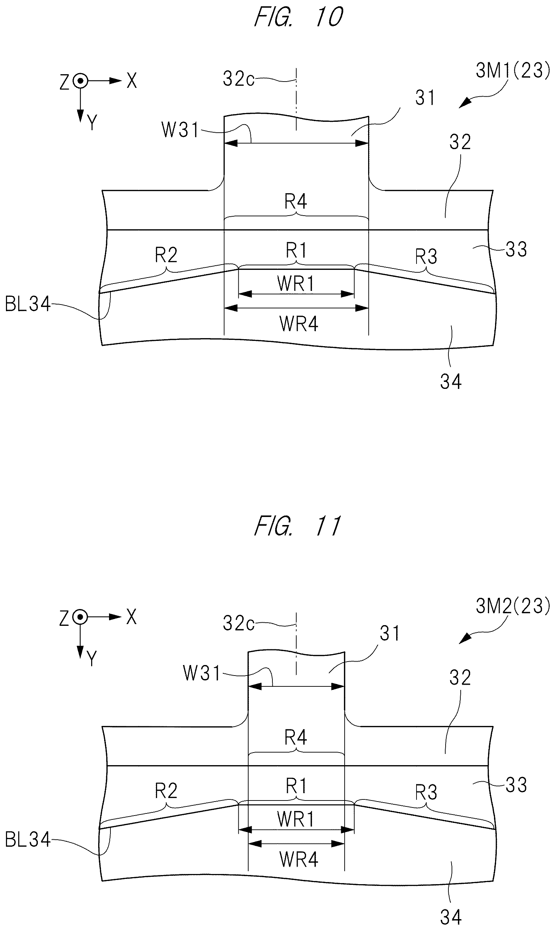

Next, a relationship between a width WR1 of the region R1 and a width W31 of the resin introduction part 31 illustrated in FIG. 6 will be described. FIG. 10 is an enlarged plan view illustrating a resin flow path in an extrusion molding die as a modification example of FIG. 6. FIG. 11 is an enlarged plan view illustrating a resin flow path in an extrusion molding die as another modification example of FIG. 6.

In the example illustrated in FIG. 6, in the Y-direction, the resin introduction part 31 and a range of the region R1 overlap each other. The width W31 of the resin introduction part 31 matches the width WR1 of the region R1. In the Y-direction, each of the regions R2 and R3 does not overlap the resin introduction part 31. An aspect illustrated in FIG. 6 can be expressed as follows. That is, in an assumption that a region of the boundary BL34 between the land part 33 and the land part 34, the region overlapping the resin introduction part 31 in the Y-direction, is a region R4 (see FIGs. 10 and 11), the width WR1 of the region R1 is 100% of a width WR4 (see FIGs. 10 and 11) of the region R4 in the X-direction.

However, the present invention is not limited to a state where the range of the region R1 and the resin introduction part 31 completely match each other in the Y-direction as illustrated in FIG. 6, and the range of the region R1 can be adjusted depending on the width W31 of the resin introduction part 31.

For example, in a case of a resin flow path 23 included in a die 3M1 illustrated in FIG. 10, the width W31 of the resin introduction part 31 is large (such as about 120 to 250 mm). In this case, the inflow pressure of the flow from the resin introduction part 31 into the manifold 32 may differ depending on the position of the resin introduction part 31 in the X-direction. That is, the inflow pressure of the flow from the resin introduction part 31 into the manifold 32 at a position close to a central axis 32c may be high, and the inflow pressure of the flow from the resin introduction part 31 to the manifold 32 at a position close to an inner wall of the resin introduction part 31 may be low due to the flow path resistance caused by the inner wall. In this case, the inflow pressure of the flow from the land part 33 to the land part 34 tends to be lower in a region close to the inner wall of the resin introduction part 31 than that in the vicinity of the central axis 32c.

Therefore, in the case of the die 3M1 illustrated in FIG. 10, a portion of each of the region R2 and the region R3 overlaps the resin introduction part 31 in the Y-direction. At the position close to the inner wall of the resin introduction part 31, the portion of each of the region R2 and the region R3 overlaps the resin introduction part 31 in the Y-direction, and therefore, the ununiformity of the inflow pressure and the ununiformity of the flow path resistances in the land parts 33 and 34 at the time of the flow of the molten resin from the manifold 32 into the land part 33 can be balanced at all positions in the X-direction, including the periphery of the position overlapping the inner wall of the resin introduction part 31 in the Y-direction.

On the other hand, for example, in a case of a resin flow path 23 included in a die 3M2 illustrated in FIG. 11, the width W31 of the resin introduction part 31 is small (such as about 30 to 100 mm). In this case, the inflow velocity of the molten resin to be introduced from the resin introduction part 31 into the manifold 32 is high. Accordingly, in a range wider than the region R4 overlapping the resin introduction part 31 in the Y-direction, the inflow pressure of the resin from the manifold 32 to the land part 33 may be high. In this case, even a region of the boundary BL34, the region not overlapping the resin introduction part 31, has a possibility of the almost same inflow pressure as that of the region R1.

Therefore, in the case of the die 3M2 illustrated in FIG. 11, the range of the region R1 is set to be wider than the range of the region R4. Specifically, in an assumption that a region of the boundary BL34 between the land part 33 and a land part 34, the region overlapping the resin introduction part 31 in the Y-direction, is the region R4, the width WR1 of the region R1 is 100% or more of the width WR4 of the region R4 in the X-direction. Since the range of the region R1 is wider than the range of the region R4, the ununiformity of the inflow pressure and the ununiformity of the flow path resistances in the land parts 33 and 34 at the time of the flow of the molten resin from the manifold 32 into the land part 33 can be balanced at all positions in the X-direction, including a peripheral region of the region R4 overlapping the resin introduction part 31 in the Y-direction.

As described with reference to FIGs. 10 and 11, the range of the region R1 can be made smaller or larger than the width WR4 of the region R4, depending on the width W31 of the resin introduction part 31. However, in the vicinity of the central axis 32c, the inflow pressure of the resin from the manifold 32 to the land part 33 may be regarded to be substantially constant. In this case, the region R1 and the region R4 preferably have the following relationship. That is, the range of the region R1 is wider than the range of the region R4. Specifically, in an assumption that the region of the boundary BL34 between the land part 33 and the land part 34, the region overlapping the resin introduction part 31 in the Y-direction, is the region R4, the width WR1 of the region R1 is 80% or more and 120% or less of the width WR4 of the region R4 in the X-direction.

### <First Modification Example>

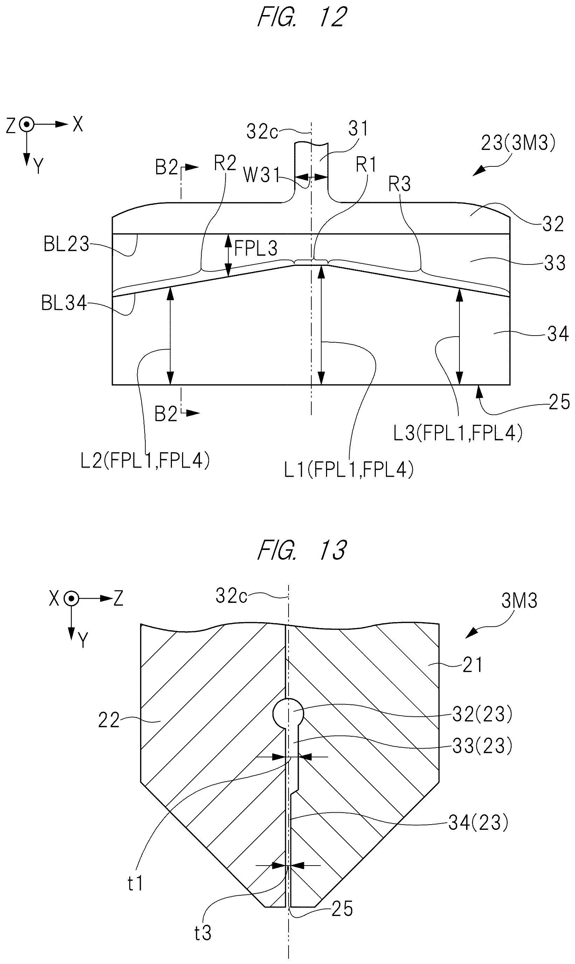

Next, another modification example of FIG. 6 will be described with reference to FIGs. 12 and 13. FIG. 12 is a plan view illustrating a resin flow path in an extrusion molding die as another modification example of FIG. 6. FIG. 13 is an enlarged cross-sectional view along a line B2 - B2 illustrated in FIG. 12. A die 3M3 illustrated in FIGs. 12 and 13 differs from the die 3 illustrated in FIG. 6 in the shape of the resin flow path 23, particularly in that the land part 35 illustrated in FIG. 6 is not provided.

In the case of the die 3M3, the opening 25 is provided at a lower end (downstream-side end) of the land part 34. In this case, the land part 34 functions as the lip land part. In the case of the die 3M3, the flow path length FPL1 described with reference to FIG. 6 matches the flow path length FPL4 of the land part 34. As illustrated in FIG. 13, the thickness t3 of the land part 34 is smaller (thinner) than the thickness t1 of the land part 33. As one example of the thicknesses t1 and t3, the thickness t1 is about 2 to 20 mm, and the thickness t3 is about 0.4 to 6 mm.

In the case of the die 3M3, the flow path length FPL1 extending from the boundary BL34 between the land part 33 and the land part 34 to the opening 25 is also the same as that in the die 3 described with reference to FIG. 6. That is, in the X-direction, the flow path length FPL1 in the region R1 in the vicinity of the middle of the boundary BL34 is maximized. In an example illustrated in FIG. 12, a value of the flow path length L1 is constant regardless of the position in the X-direction. The flow path length FPL1 (the flow path length L2) in the region R2 is gradually made smaller at the first change rate as it gets closer from the region R1 side to one end of the boundary BL34. The flow path length FPL1 (the flow path length L3) in the region R3 is gradually made smaller at the above-described first change rate as it gets closer from the region R1 side to the other end of the boundary BL34. Therefore, the die 3M3 illustrated in FIG. 12 can function to make the flow rate distribution of the molten resin in the X-direction (width direction) uniform.

Note that in the case of the die 3M3 illustrated in FIG. 12 and 13, the thickness t3 of the land part 34 (in the example illustrated in FIG. 3, the thickness t2 of the land part 34) is smaller than that in the die 3 illustrated in FIGs. 6 and 3. Accordingly, in the case of the die 3M3, the flow path resistance in the land part 34 is higher than that in the die 3. As a method for reducing the flow path resistance in the entire resin flow path 23, there is a method of providing the downstream side of the land part 34 to be with the land part 35 that functions as the lip land part as illustrated in FIG. 3. Alternatively, there is a method for reducing the flow path resistance by shortening the flow path length FPL1 illustrated in FIG. 12.

The die 3M3 described with reference to FIGs. 12 and 13 is the same as the die 3 illustrated in FIG. 6 except for the above-described differences. Therefore, repetitive description for a structure common to that of the die 3 is omitted.

Note that combination of the structure of the die 3M3 described with reference to FIGs. 12 and 13 and the structure of the die 3M1 described with reference to FIG. 10 or the structure of the die 3M2 described with reference to FIG. 11 is also applicable.

### <Second Modification Example>

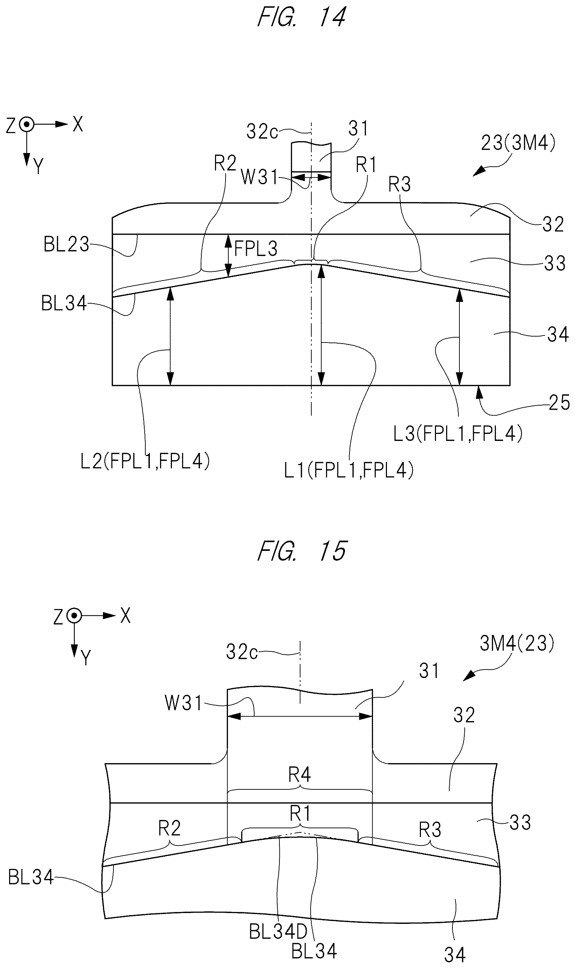

Next, another modification example of FIG. 12 will be described with reference to FIGs. 14 and 15. FIG. 14 is a plan view illustrating a resin flow path in an extrusion molding die as a modification example of FIG. 12. FIG. 15 is an enlarged plan view illustrating the periphery of the resin introduction part illustrated in FIG. 14 in an enlarged manner. A die 3M4 illustrated in FIGs. 14 and 15 differs from the die 3M3 illustrated in FIG. 12 in the shape of the resin flow path 23, particularly the shape of the region R1 in the boundary BL34 between the land part 33 and the land part 34. In FIG. 15, in order to clearly illustrate that the change rate of the boundary BL34 in the region R1 is smaller than the change rate in the region R2 and the change rate in the region R3, an extension line of a side of the region R2 and an extension line of a side of the region R3 are illustrated as a virtual line BL34D.

Specifically, in the case of the die 3M4 illustrated in FIGs. 14 and 15, the flow path length FPL1 extending in the Y-direction from the region R1 in the boundary BL34 between the land part 33 and the land part 34 to the opening 25 (see FIG. 14) changes depending on the position in the X-direction. This point differs from those in the die 3 illustrated in FIG. 6, the die 3M1 illustrated in FIG. 10, the die 3M2 illustrated in FIG. 11, and the die 3M3 illustrated in FIG. 12.

If the width W31 of the resin introduction part 31 is large, as described with reference to FIG. 10, the inflow pressure of the flow of the molten resin from the manifold 32 to the land part 33 in the region R4 overlapping the resin introduction part 31 may differ depending on the position in the X-direction. That is, a position close to the central axis 32c may have the relatively high inflow pressure, and the vicinity of the side wall of the resin introduction part 31 may have the low inflow pressure due to the influence of the flow path resistance caused by the side wall. In the case of the die 3M4 illustrated in FIGs. 14 and 15, a value of the flow path length FPL1 in the region R1 is changed depending on the position in the X-direction. In this modification example, the boundary BL34 in the region R1 has a circular arc shape, a vertex of which is at a position intersecting the central axis 32c. A value of the flow path length FPL1 is maximized at a position overlapping the central axis 32c. One arc end of the circular arc shape is connected to the region R2, and the other end of the circular arc shape is connected to the region R3.

However, a change amount of the inflow pressure of the molten resin in the region R1 depending on the position in the X-direction is smaller than each change amount of the inflow pressure of the molten resin in the region R2 and the region R3 depending on the positions in the X-direction. Therefore, in this modification example, the change rate of the flow path length FPL1 in the region R1 depending on the position in the X-direction is smaller than each change rate of the flow path length FPL1 in the region R2 and the flow path length FPL1 in the region R3. This point is obvious from the fact that an angle formed between the boundary BL34 in the region R1 and the X-direction is smaller than an angle formed between the virtual line BL34D illustrated in FIG. 15 and the X-direction.

In this modification example, since the slight ununiformity of the inflow pressure in the vicinity of the central axis 32c can be cancelled by the shape of the region R1 in the boundary BL34, a film having more uniformity than that that in the die 3M3 illustrated in FIG. 12 can be acquired.

The die 3M4 described with reference to FIGs. 14 and 15 is the same as the die 3M3 illustrated in FIG. 12 except for the above-described differences. Therefore, repetitive description for a structure common to that of the die 3M3 is omitted.

Note that combination among the structure of the die 3M4 described with reference to FIGs. 14 and 15, the structure of the die 3 described with reference to FIG. 6, the structure of the die 3M2 described with reference to FIG. 11 or the structure of the die 3M3 described with reference to FIG. 12 is also applicable.

In addition, in this modification example, the example in which the shape of the region R1 in the boundary BL34 is the circular arc shape has been described as the aspect in the case where the change rate of the boundary BL34 in the region R1 is smaller than the change rate in the region R2 and the first change rate in the region R3. However, the shape of the region R1 in the boundary BL34 is not limited to the circular arc shape, and various modification examples are applicable within a range satisfying the condition that the change rate of the boundary BL34 in the region R1 is smaller than the change rate in the region R2 and the first change rate in the region R3.

### <Third Modification Example>

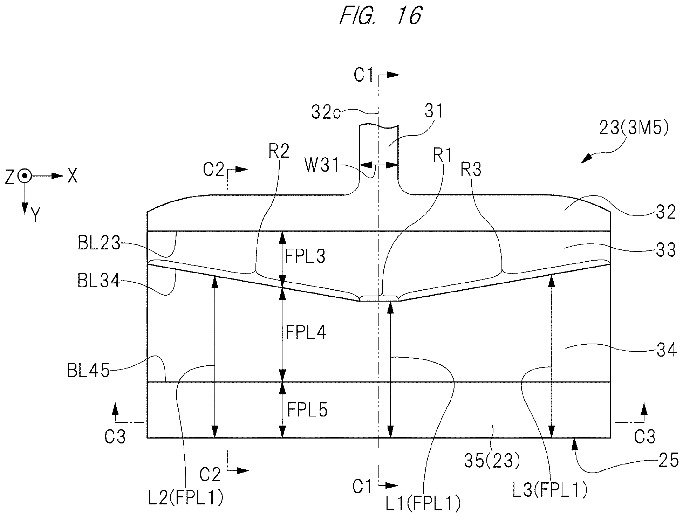

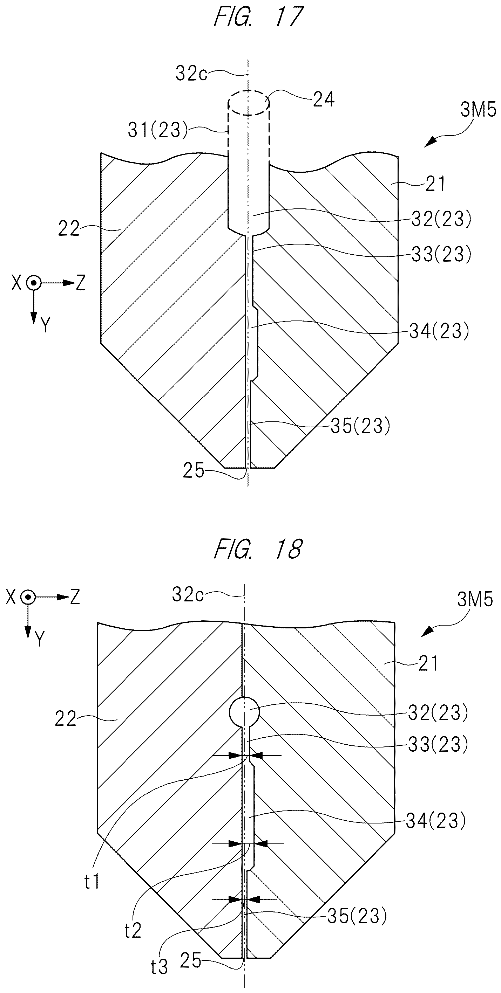

Next, another modification example of FIG. 6 will be described with reference to FIGs. 16, 17, and 18. FIG. 16 is a plan view illustrating a resin flow path in an extrusion molding die as another modification example of FIG. 6. FIG. 17 is an enlarged cross-sectional view along a line C1 - C1 illustrated in FIG. 16. FIG. 18 is an enlarged cross-sectional view along a line C2 - C2 illustrated in FIG. 16. Note that a cross-sectional view along a line C3 - C3 illustrated in FIG. 16 is similar to that in FIG. 4, and therefore, illustration thereof is omitted. A die 3M5 illustrated in FIGs. 16 to 18 differs from the die 3 illustrated in FIG. 6 in the shape of the resin flow path 23, particularly in that the thickness t1 (see FIG. 18) of the land part 33 is smaller than the thickness t2 (see FIG. 18) of the land part 34 and in a shape of the boundary BL34.

Specifically, as illustrated in FIG. 18, the land parts 33, 34, and 35 each have a slit-like (plate-like) shape having a plane (main surface) substantially parallel to the X-direction and the Y-direction. A relationship among respective thicknesses of the land parts 33, 34 and 35 is as follows.

That is, as illustrated in FIG. 3, the thickness t2 of the land part 34 is larger than the thickness t1 of the land part 33 (t1 < t2), and the thickness t3 of the land part 35 is smaller than the thickness t2 of the land part 34 (t2 > t3). In addition, the thickness of the land part 33 is uniform, the thickness of the land part 34 is uniform, and the thickness of the land part 35 is uniform. As one example of the thicknesses t1, t2, and t3, the thickness t1 is about 2 to 20 mm, the thickness t2 is about 0.4 to 6 mm, and the thickness t3 is about 0.8 to 10 mm.

In this modification example, since the thickness t2 of the land part 34 is larger than the thickness t1 of the land part 33, the flow of the molten resin is easier in the land part 34 than in the land part 33. That is, if the flow distance of the molten resin is the same between the land part 33 and the land part 34, the flow path resistance is lower in the land part 34 than in the land part 33. That is, the flow path resistance per unit distance is lower in the land part 34 than in the land part 33. Note that the fact that the respective flow path resistances of the land parts 33, 34, and 35 per unit distance are made larger as their thicknesses get smaller has been described above.

In this modification example, since the thickness t1 of the land part 33 and the thickness t2 of the land part 34 differ from those in the die 3 illustrated in FIG. 2 as described above, it is correspondingly necessary to change the shape of the boundary BL34.

Specifically, in the X-direction, the flow path length FPL1 in the region R1 in the vicinity of the middle of the boundary BL34 is minimized (shortest). In the example illustrated in FIG. 16, the value of the flow path length L1 is constant regardless of the position in the X-direction.

In the region R2 in the boundary BL34, the flow path length is gradually made larger as it gets closer from the region R1 side to the one end of the boundary BL34. The angle formed between the region R2 in the boundary BL34 and the X-direction is constant. Therefore, when the angle formed between the region R2 and the X-direction is defined as a change rate of the flow path length FPL1, the change rate can be expressed as follows. That is, the flow path length FPL1 (the flow path length L2) in the region R2 is gradually made larger at a first change rate as it gets closer from the region R1 side to the one end of the boundary BL34.

The region R3 in the boundary BL34 is gradually made larger as it gets closer from the region R1 side to the other end of the boundary BL34. An absolute value of an angle formed between the region R3 in the boundary BL34 and the X-direction is the same as an absolute value of an angle formed between the region R2 in the boundary BL34 and the X-direction, and is constant. Accordingly, when the angle formed between the region R3 and the X-direction is defined as a change rate of the flow path length FPL1, the angle can be expressed as follows. That is, the flow path length FPL1 (the flow path length L3) in the region R3 is gradually made larger at the above-described first change rate as it gets closer from the region R1 side to the other end of the boundary BL34.

The die 3M5 illustrated in FIG. 16 can also function to make the flow rate distribution of the molten resin in the X-direction (width direction) uniform. A reason for this point is the same as the reason described with reference to FIG. 6. In this modification example, differences from FIG. 6 will be described.

In this modification example, as illustrated in FIG. 17, the thickness t1 of the land part 33 is smaller than the thickness t2 of the land part 34. Accordingly, the following can be said in the viewpoint of ease of the flow of the molten resin. That is, the flow of the molten resin is easier in the land part 34 than in the land part 33. In other words, the flow path resistance in the land part 33 is higher than the flow path resistance in the land part 34.

Accordingly, in the case of the die 3M5 of this modification example, the flow path length FPL4 of the land part 34 (in the present embodiment, that can also be regarded as a total flow path length FPL1 of the land part 33 and the land part 34) is minimized in the region R1 in the vicinity of the center, and is gradually made larger as it gets closer from the region R1 to both ends (both ends in the X-direction) . When the flow path length FPL1 is minimized in the region R1 in the boundary BL34 while being gradually made larger as it gets closer from the region R1 to both ends, the total of the flow path resistance in the land part 33 and the flow path resistance in the land part 34 is maximized in the region R1, and is gradually made smaller as it gets closer from the region R1 to both ends (both ends in the X-direction) . In this manner, the inflow pressure of the molten resin at the time of the flow from the land part 34 into the land part 35 can be substantially made constant regardless of the position in the X-direction.

In this manner, the ununiformity of the inflow pressure at the time of the flow of the molten resin from the land part 34 into the land part 35 can be suppressed, and the inflow pressure of the molten resin at the time of the flow into the land part 35 can be substantially made constant regardless of the position in the X-direction. Further, the thickness t3 (see FIG. 3) of the land part 35 is constant regardless of the position in the X-direction. Accordingly, the flow rate (flow velocity) of the molten resin to be discharged from the opening 25 located at the downstream-side end of the land part 35 can be substantially made constant regardless of the position in the X-direction. That is, the die 3M5 can function to make the flow rate distribution of the molten resin in the X-direction (width direction) uniform.

The die 3M5 described with reference to FIGs. 16 and 18 is the same as the die 3 illustrated in FIG. 6 except for the above-described differences. Therefore, repetitive description for a structure common to that of the die 3 is omitted.

Note that combination of the structure of the die 3M5 described with reference to FIGs. 16 to 18, the structure of the die 3M1 described with reference to FIG. 10, the structure of the die 3M2 described with reference to FIG. 11 and the structure of the die 3M3 described with reference to FIG. 12 or the structure of the die 3M4 described with reference to FIG. 14 is also applicable.

The combination of this modification example with the structure of the die 3M1 described with reference to FIG. 10 or the structure of the die 3M2 described with reference to FIG. 11 preferably satisfies the following relationship. Specifically, as illustrated in FIGs. 10 or 11, in an assumption that the region of the boundary BL34 between the land part 33 and the land part 34, the region overlapping the resin introduction part 31 in the Y-direction, is the region R4, the width WR1 of the region R1 is 80% or more and 120% or less of the width WR4 of the region R4 in the X-direction.

In addition, in the combination of this modification example with the structure of die 3M4 described with reference to FIG. 14, the flow path length FPL1 in the boundary BL34 at the position overlapping the central axis 32c is minimized. Even in the combination with this modification example, the shape of the region R1 in the boundary BL34 is not limited to the circular arc shape as already described.

### <Fourth Modification Example>

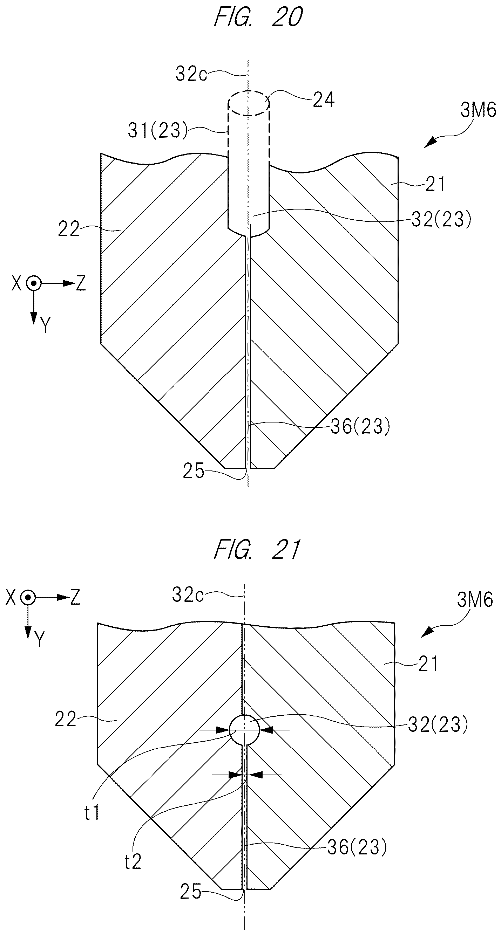

Next, another modification example of FIG. 6 will be described with reference to FIGs. 19, 20, and 21. FIG. 19 is a plan view illustrating a resin flow path in an extrusion molding die as another modification example of FIG. 6. FIG. 20 is an enlarged cross-sectional view along a line D1 - D1 illustrated in FIG. 19. FIG. 21 is an enlarged cross-sectional view along a line D2 - D2 illustrated in FIG. 19. Note that a cross-sectional view along a line D3 - D3 illustrated in FIG. 19 is similar to that in FIG. 4, and therefore, illustration thereof is omitted. A die 3M6 illustrated in FIGs. 19 to 21 differs from the die 3 illustrated in FIG. 6 in a shape of the manifold 32 and a structure of the manifold 32.

Specifically, the die 3M6 in this modification example includes: the manifold 32 connected to the resin introduction part 31; and a land part 36 provided on the downstream side of the manifold 32 and connected to the manifold 32. In the example illustrated in FIG. 6, the boundary BL23 between the manifold 32 and the land part 33 is parallel to the X-direction. However, in the case of the die 3M6 illustrated in FIG. 19, a boundary BL26 between the manifold 32 and the land part 36 is not parallel to the X-direction, and includes portions (the region R2 and the region R3) inclining with respect to the X-direction.

In addition, the manifold 32 is connected to the resin introduction part 31 on the opposite side of the boundary BL26, and has sides 32s1 and 32s2 both adjacent to a portion connected to the resin introduction part. In the example illustrated in FIG. 6, each of the side 32s1 and the side 32s2 is parallel to the X-direction. On the other hand, in the example illustrated in FIG. 19, each of the sides 32s1 and 32s2 inclines with respect to the X-direction.

In addition, in this modification example, the plurality of land parts are not arranged but one land part 36 is arranged on the downstream side of the manifold 32. The opening 25 serving as the lip port is formed at a lower end (a downstream-side end) of the land part 36.

This modification example provides a structure in which the shape of the manifold 32 is formed as described above, thereby reducing the time taken for the flow of the molten resin through the resin flow path 23. By the reduction in the time taken for the flow of the molten resin through the resin flow path 23, a damage on the resin by heat can be reduced.

As similar to the die 3 illustrated in FIG. 6, this modification example needs the following conditions in order to make the flow rate distribution of the molten resin in the X-direction (width direction) uniform. That is, the boundary BL26 between the land part 32 and the land part 36 includes: the region R1 including the portion intersecting the central axis 32c; the region R2 arranged between the region R1 and one end of the boundary BL26 between the manifold 32 and the land part 36 in the X-direction; and the region R3 arranged between the region R1 and the other end of the boundary BL26 between the manifold 32 and the land part 36 in the X-direction. In the X-direction, the region R1 is in the middle of the boundary BL34. In the example illustrated in FIG. 6, the boundary BL34 in the region R1 is parallel to the X-direction. In other words, the boundary BL34 in the region R1 is parallel to the extension direction of the opening 25.

In attention paid to respective inclination angles of the regions R1, R2, and R3 with respect to the X-direction, the inclination angles can be expressed as follows. That is, the boundary BL26 in the region R2 inclines to form an angle that is less than 90 degrees with respect to the X-direction. The boundary BL26 in the region R3 inclines to form an angle that is less than 90 degrees with respect to the X-direction. An angle formed between the boundary BL26 and the X-direction in the region R1 is less than respective angles (but including 0 degree) formed between the boundary BL26 and the X-direction in the region R2 and the region R3.

Next, in each of the regions R1, R2, and R3, the flow path length FPL1 of the resin flow path extending from the boundary BL26 to the opening 25 will be described. The flow path length FPL1 illustrated in FIG. 19 is the flow path length of the land part 34. The flow path length FPL1 can be regarded as a dimension (length) of the land part 36 in the flow direction of the molten resin.

In this modification example, in the X-direction, the flow path length FPL1 in the region R1 in the vicinity of the center of the boundary BL34 is maximized (longest). In the example illustrated in FIG. 6, a value of the flow path length L1 is constant regardless of the position in the X-direction.

In the region R2 in the boundary BL26, the flow path length is gradually made smaller as it gets closer from the region R1 side to the one end of the boundary BL26. The angle formed between the region R2 in the boundary BL26 and the X-direction is constant. Therefore, when the angle formed between the region R2 and the X-direction is defined as a change rate of the flow path length FPL1, the change rate can be expressed as follows. That is, the flow path length FPL1 (the flow path length L2) in the region R2 is gradually made smaller at a first change rate as it gets closer from the region R1 side to the one end of the boundary BL26.

The region R3 in the boundary BL26 is gradually made smaller as it gets closer from the region R1 side to the other end of the boundary BL26. An absolute value of an angle formed between the region R3 in the boundary BL26 and the X-direction is the same as an absolute value of an angle formed between the region R2 in the boundary BL26 and the X-direction, and is constant. Accordingly, when the angle formed between the region R3 and the X-direction is defined as a change rate of the flow path length FPL1, the angle can be expressed as follows. That is, the flow path length FPL1 (the flow path length L3) in the region R3 is gradually made smaller at the above-described first change rate as it gets closer from the region R1 side to the other end of the boundary BL26.

However, a combination with the structure of the die 3M4 described with reference to FIGs. 14 and 15 may be applied. In this case, the flow path length FPL1 in the region R1 changes at a change rate smaller than the above-described first change rate.

The die 3M6 illustrated in FIG. 19 can also function to make the flow rate distribution of the molten resin in the X-direction (width direction) uniform. A reason for this point is as follows.

In the case of the die 3M6, the flow path length FPL1 of the land part 36 is maximized in the region R1 in the vicinity of the center, and is gradually made smaller as it gets closer from the region R1 to both ends (both ends in the X-direction). The thickness t2 (see FIG. 21) of the land part 36 is equal to or smaller than the minimum value of the thickness t1 (see FIG. 21) of the land part 32. Therefore, the flow of the molten resin is more difficult in the land part 36 than in the land part 32. That is, if the flow distance of the molten resin is the same between the land part 32 and the land part 36, the flow path resistance is higher in the land part 36 than in the manifold 32.

When the flow path length FPL1 is maximized in the region R1 in the boundary BL26 while being gradually made smaller as it gets closer from the region R1 to both ends, the flow path resistance in the land part 36 is maximized in the region R1, and is gradually made smaller as it gets closer from the region R1 to both ends (both ends in the X-direction). In this manner, the inflow pressure of the molten resin at the time of the flow from the land part 36 into the land part 35 can be substantially made constant regardless of the position in the X-direction. That is, the flow path resistance at the time of passing of the molten resin through the land part 36 is set to be gradually made smaller as it gets closer from the middle to both ends in the X-direction in consideration of the fact that the inflow pressure at the time of the flow of the molten resin from the manifold 32 into the land part 36 is gradually made smaller as it gets closer from the region R1 to both ends in the X-direction. In this manner, the ununiformity of the inflow pressure at the time of the flow of the molten resin from the manifold 32 into the land part 36 can be cancelled by the ununiformity of the flow path resistances in the land parts 33 and 34. As a result, the ununiformity of the inflow pressure at the time of the flow of the molten resin from the land part 36 into the land part 35 can be suppressed, and the flow rate of the molten resin at the time of the discharge from the opening 25 can be substantially made constant regardless of the position in the X-direction.

The die 3M6 described with reference to FIGs. 19 and 21 is the same as the die 3 illustrated in FIG. 6 except for the above-described differences. Therefore, repetitive description for a structure common to that of the die 3 is omitted.

Note that combination of the structure of the die 3M6 described with reference to FIGs. 19 to 21, the structure of the die 3M1 described with reference to FIG. 10, the structure of the die 3M2 described with reference to FIG. 11 and the structure of the die 3M3 described with reference to FIG. 12 or the structure of the die 3M4 described with reference to FIG. 14 is also applicable.

In application of combination of this modification example with the structure of the die 3M1 described with reference to FIG. 10, the structure of the die 3M2 described with reference to FIG. 11, the structure of the die 3M3 described with reference to FIG. 12, or the structure of the die 3M4 described with reference to FIG. 14, the description "the boundary BL34 between the land part 33 and the land part 34" in each description is rephrased as the description "the boundary BL26 between the manifold 32 and the land part 36".

The combination of this modification example with the structure of the die 3M1 described with reference to FIG. 10 or the structure of the die 3M2 described with reference to FIG. 11 preferably satisfies the following relationship. Specifically, in an assumption that the region of the boundary BL26 between the manifold 32 and the land part 36, the region overlapping the resin introduction part 31 in the Y-direction, is the region R4 (see FIGs. 10 and 11), the width WR1 of the region R1 is 80% or more and 120% or less of the width WR4 (see FIGs. 10 and 11) of the region R4 in the X-direction.

In addition, the die according to each of the above-described modification examples can be replaced with the die 3 illustrated in FIG. 1 for the application. For example, if the die 3M6 illustrated in FIGs. 19 to 21 is replaced with the die 3 illustrated in FIG. 1, a film manufacturing apparatus 1 including the die 3M6 and a film manufacturing method using the film manufacturing apparatus 1 are obtained.

In the foregoing, the invention made by the inventors of the present application has been concretely described based on the embodiments. However, it is needless to say that the present invention is not limited to the foregoing embodiments, and various modifications can be made within the scope of the present invention.

### EXPLANATION OF REFERENCE CHARACTERS

1 film manufacturing apparatus (extrusion molding apparatus, extrusion molding machine)
2 extruder (extruder machine)
2a resin introduction port
3, 3C1, 3M1, 3M2, 3M3, 3M4, 3M5, 3M6 die (extrusion molding die, mold)
4 cooling roll (cast roll)
5 touch roll
6 puller (puller machine)
7 stretching machine
11 molten resin
11a resin film
111, 112 molten resin film
21, 22 die member (die main body, mold)
23 resin flow path
24 opening (supply port, introduction port)
25 opening (discharge port)
31 resin introduction part
32 manifold
32c central axis
32s1, 32s2 side
33, 34, 35, 36 land part (slit, region)
BL23, BL26, BL34, BL45 boundary
BL34D virtual line
FPL1, FPL3, FPL4, FPL5, L1, L2, L3 flow path length
R1, R2, R3, R4 region
W31, WR1, WR4 width

## Claims

1. An extrusion molding die comprising:
a first opening for supplying molten resin;
a second opening for discharging the molten resin; and
a resin flow path extending from the first opening to the second opening,
wherein the resin flow path includes:
a resin introduction part connected to the first opening;
a manifold connected to the resin introduction part; and
a first land part and a second land part arranged between the manifold and the second opening sequentially in a first direction extending from the manifold to the second opening,
the second opening extends in a second direction perpendicular to the first direction,
a thickness of the second land part differs from a thickness of the first land part,
in an assumption that a virtual line passing through a center of the resin introduction part and extending to the second opening in the first direction is a first central axis,
a boundary between the first land part and the second land part includes:
a first region including a portion intersecting the first central axis;
a second region arranged between the first region and one end of the boundary between the first land part and the second land part in the second direction; and
a third region arranged between the first region and the other end of the boundary between the first land part and the second land part in the second direction,
a first flow path length extending from the boundary between the first land part and the second land part to the second opening is configured:
in the second region, to gradually change at a first change rate as it gets closer from the first region side to the one end,
in the third region, to gradually change at the first change rate as it gets closer from the first region side to the other end, and
in the first region, to be constant or change at a smaller change rate than the first change rate.

2. The extrusion molding die according to claim 1,
wherein in an assumption that a region of the boundary between the first land part and the second land part, the region overlapping the resin introduction part in the first direction, is a fourth region,
a width of the first region is 80% or more and 120% or less of a width of the fourth region in the second direction.

3. The extrusion molding die according to claim 1,
wherein the thickness of the second land part is smaller than the thickness of the first land part,
the first flow path length extending from the boundary between the first land part and the second land part to the second opening is configured:
in the second region, to be gradually made smaller at the first change rate as it gets closer from the first region side to the one end,
in the third region, to be gradually made smaller at the first change rate as it gets closer from the first region side to the other end, and
in the first region, to be equal to or more than a maximum value of the first flow path length in the second region and be equal to or more than a maximum value of the first flow path length in the third region.

4. The extrusion molding die according to claim 1,
wherein the thickness of the second land part is larger than the thickness of the first land part,
the first flow path length extending from the boundary between the first land part and the second land part to the second opening is configured to:
in the second region, to be gradually made larger at the first change rate as it gets closer from the first region side to the one end;
in the third region, to be gradually made larger at the first change rate as it gets closer from the first region side to the other end; and
in the first region, to be equal to or less than a minimum value of the first flow path length in the second region and be equal to or less than a minimum value of the first flow path length in the third region.

5. The extrusion molding die according to claim 1,
wherein, in the first region, the first flow path length extending from the boundary between the first land part and the second land part to the second opening is configured to be constant.

6. The extrusion molding die according to claim 1,
wherein, in the first region, the first flow path length extending from the boundary between the first land part and the second land part to the second opening is configured to change at a smaller change rate than the first change rate.

7. An extrusion molding die comprising:
a first opening for supplying molten resin;
a second opening for discharging the molten resin; and
a resin flow path extending from the first opening to the second opening,
wherein the resin flow path includes:
a resin introduction part connected to the first opening;
a manifold connected to the resin introduction part; and
a land part arranged between the manifold and the second opening in a first direction to be continuously formed to the manifold,
the second opening extends in a second direction perpendicular to the first direction,
a thickness of the land part is equal to or smaller than a thickness of the manifold,
in an assumption that a virtual line passing through a center of the resin introduction part and extending to the second opening in the first direction is a first central axis,
a boundary between the manifold and the land part includes:
a first region including a portion intersecting the first central axis;
a second region arranged between the first region and one end of the boundary between the manifold and the land part in the second direction; and
a third region arranged between the first region and the other end of the boundary between the manifold and the land part in the second direction,
a first flow path length extending from the boundary between the manifold and the land part to the second opening is configured to:
in the second region, to be gradually made smaller at a first change rate as it gets closer from the first region side to the one end;
in the third region, to be gradually made smaller at the first change rate as it gets closer from the first region side to the other end; and
in the first region, to be constant or change at a smaller change rate than the first change rate.

8. The extrusion molding die according to claim 7,
wherein in an assumption that a region of the boundary between the manifold and the land part, the region overlapping the resin introduction part in the first direction, is a fourth region,
a width of the first region is 80% or more and 120% or less of a width of the fourth region in the second direction.

9. The extrusion molding die according to claim 7,
wherein, in the first region, the first flow path length extending from the boundary between the manifold and the land part to the second opening is configured to be constant.

10. The extrusion molding die according to claim 7,
wherein, in the first region, the first flow path length extending from the boundary between the manifold and the land part to the second opening is configured to change at a smaller change rate than the first change rate.

11. A film manufacturing apparatus comprising:
an extruder;
a die to which molten resin extruded from the extruder is supplied;
a cooling jig for cooling the molten resin discharged from the die,
wherein the die includes:
a first opening for supplying the molten resin;
a second opening for discharging the molten resin; and
a resin flow path extending from the first opening to the second opening,
the resin flow path includes:
a resin introduction part connected to the first opening;
a manifold connected to the resin introduction part; and
a first land part and a second land part arranged between the manifold and the second opening sequentially in a first direction extending from the manifold to the second opening,
the second opening extends in a second direction perpendicular to the first direction,
a thickness of the second land part differs from a thickness of the first land part,
in an assumption that a virtual line passing through a center of the resin introduction part and extending to the second opening in the first direction is a first central axis,
a boundary between the first land part and the second land part includes:
a first region including a portion intersecting the first central axis;
a second region arranged between the first region and one end of the boundary between the first land part and the second land part in the second direction; and
a third region arranged between the first region and the other end of the boundary between the first land part and the second land part in the second direction,
a first flow path length extending from the boundary between the first land part and the second land part to the second opening is configured:
in the second region, to be gradually made smaller at a first change rate as it gets closer from the first region side to the one end;
in the third region, to be gradually made smaller at the first change rate as it gets closer from the first region side to the other end; and
in the first region, to be constant or change at a smaller change rate than the first change rate.

12. A film manufacturing method comprising steps of:
extruding molten resin from an extruder and supplying the molten resin to a die;
molding the molten resin into a film shape by using the die, and
cooling the film-shaped molten resin discharged from the die,
wherein the die includes:
a first opening for supplying the molten resin;
a second opening for discharging the molten resin; and
a resin flow path extending from the first opening to the second opening,
the resin flow path includes:
a resin introduction part connected to the first opening;
a manifold connected to the resin introduction part; and
a first land part and a second land part arranged between the manifold and the second opening sequentially in a first direction extending from the manifold to the second opening,
the second opening extends in a second direction perpendicular to the first direction,
a thickness of the second land part differs from a thickness of the first land part,
in an assumption that a virtual line passing through a center of the resin introduction part and extending to the second opening in the first direction is a first central axis,
a boundary between the first land part and the second land part includes:
a first region including a portion intersecting the first central axis;
a second region arranged between the first region and one end of the boundary between the first land part and the second land part in the second direction; and
a third region arranged between the first region and the other end of the boundary between the first land part and the second land part in the second direction, and
a first flow path length extending from the boundary between the first land part and the second land part to the second opening is configured:
in the second region, to be gradually made smaller at a first change rate as it gets closer from the first region side to the one end,
in the third region, to be gradually made smaller at the first change rate as it gets closer from the first region side to the other end, and
in the first region, to be constant or change at a smaller change rate than the first change rate.

13. A film manufacturing apparatus comprising:
an extruder;
a die to which molten resin extruded from the extruder is supplied;
a cooling jig for cooling the molten resin discharged from the die,
wherein the die is an extrusion molding die including:
a first opening for supplying the molten resin;
a second opening for discharging the molten resin, and
a resin flow path extending from the first opening to the second opening,
the resin flow path includes:
a resin introduction part connected to the first opening;
a manifold connected to the resin introduction part; and
a land part arranged between the manifold and the second opening in a first direction to be continuously formed to the manifold,
the second opening extends in a second direction perpendicular to the first direction,
a thickness of the land part is equal to or smaller than a thickness of the manifold,
in an assumption that a virtual line passing through a center of the resin introduction part and extending to the second opening in the first direction is a first central axis,
a boundary between the manifold and the land part includes:
a first region including a portion intersecting the first central axis;
a second region arranged between the first region and one end of the boundary between the manifold and the land part in the second direction; and
a third region arranged between the first region and the other end of the boundary between the manifold and the land part in the second direction, and
a first flow path length extending from the boundary between the manifold and the land part to the second opening is configured:
in the second region, to be gradually made smaller at a first change rate as it gets closer from the first region side to the one end,
in the third region, to be gradually made smaller at the first change rate as it gets closer from the first region side to the other end, and
in the first region, to be constant or change at a smaller change rate than the first change rate.

14. A film manufacturing method comprising steps of:
extruding molten resin from an extruder and supplying the molten resin to a die;
molding the molten resin into a film shape by using the die, and
cooling the film-shaped molten resin discharged from the die,
wherein the die is an extrusion molding die including:
a first opening for supplying the molten resin;
a second opening for discharging the molten resin; and
a resin flow path extending from the first opening to the second opening,
the resin flow path includes:
a resin introduction part connected to the first opening;
a manifold connected to the resin introduction part; and
a land part arranged between the manifold and the second opening in a first direction to be continuously formed to the manifold,
the second opening extends in a second direction perpendicular to the first direction,
a thickness of the land part is equal to or smaller than a thickness of the manifold,
in an assumption that a virtual line passing through a center of the resin introduction part and extending to the second opening in the first direction is a first central axis,
a boundary between the manifold and the land part includes:
a first region including a portion intersecting the first central axis;
a second region arranged between the first region and one end of the boundary between the manifold and the land part in the second direction; and
a third region arranged between the first region and the other end of the boundary between the manifold and the land part in the second direction, and
a first flow path length extending from the boundary between the manifold and the land part to the second opening is configured:
in the second region, to be gradually made smaller at a first change rate as it gets closer from the first region side to the one end;
in the third region, to be gradually made smaller at the first change rate as it gets closer from the first region side to the other end; and
in the first region, to be constant or change at a smaller change rate than the first change rate.
